# EUROPÄISCHE PATENTSCHRIFT

(11) **EP 0 436 195 B1**
(45) Veröffentlichungstag und Bekanntmachung des Hinweises auf die Patenterteilung: **20.01.1993**
(21) Anmeldenummer: 90125022.5
(22) Anmeldetag: 20.12.1990
(51) Int. Cl.: A61C 8/00

(54) **Einzelzahnimplantat**
Dental implant
Implant dentaire

(30) Priorität: 05.01.1990 DE 9000076 U
(43) Veröffentlichungstag der Anmeldung: 10.07.1991
(73) Patentinhaber: Lang, Manfred Dr., D-90403 Nürnberg (DE)
(72) Erfinder: Lang, Manfred Dr., D-90403 Nürnberg (DE)
(74) Vertreter: Böhme, Volker, Dipl.-Ing.

(56) Entgegenhaltungen:
- EP-A- 0 198 306
- EP-A- 0 282 789
- US-A- 4 780 081

## Beschreibung

Die Erfindung betrifft ein Einzelzahnimplantat mit einem Schaftteil und einem konischen Retentionsteil, das mit Verdrängungsfortsätzen versehen ist.

Bei einem derartigen bekannten (DE-PS-31 36 602) Implantat handelt es sich um eine selbstschneidende Schraube mit durchgehender Gewindehelix. Zum Implantieren des bekannten Implantates wird in dem Kieferknochen mit dem Kerndurchmesser des Schaftteiles aufgebohrt. Das Implantat schneidet sein Gewinde völlig selbst. Dieses Implantat verlangt eine Tiefenbohrung über den Alveolenboden hinaus in den Kieferknochen, um eine genügende Primärstabilität zu erreichen. Dagegen ist beim erfindungsgemäßen Implantat der alveoläre Knochen zur Verankerung ausreichend.

Aufgabe der Erfindung ist es, ein Einzelzahnimplantat der eingangs genannten Art zu schaffen, das in die vorbereitete Alveole einführbar ist und seine Retention nur im alveolären Knochen findet. Das erfindungsgemäße Einzelzahnimplantat ist, diese Aufgabe lösend, dadurch gekennzeichnet, daß die Verdrängungsfortsätze in Draufsicht als sichelförmige Retentionsflügel mit in Seitenansicht keilförmigern Querschnitt ausgebildet sind, die am Retentionsteil einander gegenüberliegend vorgesehen sind.

Andere Einzelzahnimplantate, wie Schrauben oder Zylinder mit stärkerem Durchmesser oder das "Tübinger Sofortimplantat" können nicht soweit in den interradikulären Alveolenknochen eindringen wie das erfindungsgemäße Einzelzahnimplantat, was für eine gute Primärstabilität wesentlich ist.

Die anatomische Form einer Zahnwurzel und der diese aufnehmenden Alveole ist konisch und im Querschnitt oval, wobei die Zahnwurzeln mit Breitseiten nebeneinander stehen. Dadurch ergibt sich im Röntgenbild ein pyramidenförmiger Knochenverlauf zwischen den einzelnen Zahnwurzeln (interradikulärer alveolärer Knochen) und zwar der Gestalt, daß die Pyramidenspitze in Zahnkronenrichtung zeigt. Auf diesen anatomischen Gegebenheiten des alveolären Knochens beruht die Gestaltung des erfindungsgemäßen Einzelzahnimplantates. Da das Retentionsteil konisch ist und die Retentionsflügel einen ovalen Querschnitt ergeben, kann man das erfindungsgemäße Einzelzahnimplantat formgleich in die vorbereitete Alveole einführen. Durch eine Drehung um maximal 90° drängen sich die Retentionsflügel in den pyramidenförmigen Alveolenknochen. Dadurch folgt eine Verschlüsselung bzw. Verriegelung des Einzelzahnimplantates in dem interradikulären Alveolenknochen.

Es handelt sich bei dem erfindungsgemäßen Einzelzahnimplantat um ein sogenanntes Zweiphasenimplantat, das nach der Entfernung eines Zahnes sofort in das betreffende Zahnfach implantiert wird. Nach einer kurzen Einheilungsphase wird das Implantat an der Pfostendurchtrittsstelle freigelegt, der Implantatpfosten eingeschraubt und eine Keramikkrone eingesetzt, ohne wie bisher üblich, eine aufwendige und auch teuere Brückenkonstruktion mit Beschleifung der Nachbarzähne durchführen zu müssen. Darüber hinaus wird auch der ansonsten eintretende Knochenrückzug (Inaktivitätsathrophie) in dem zahnlos gewordenen Kieferabschnitt verhindert, was besonders im Oberkiefer-Frontbereich auch von ganz entscheidender ästhetischer Bedeutung ist.

Besonders zweckmäßig und vorteilhaft ist es, wenn die Retentionsflügel in Umfangsrichtung gesehen eine leichte Schrägneigung aufweisen. Durch die Schrägneigung der Retentionsflügel wird das Implantat beim Verschlüsseln leicht nach unten in das Zahnfach gedrückt, was zum einen die notwendige Primärstabilität zusätzlich verbessert und zum anderen einen raschen Blutungsstop herbeiführen kann. Dies wiederum begünstigt die Auffüllung der freien Räume mit resorbierbarem Knochenersatzmaterial. Außerdem werden die aus der Orthopädie bekannten Kriterien der sogenannten Druckosteosynthese voll berücksichtigt. Das Schaftteil ist in der Regel im Querschnitt zylindrisch und bestimmt die Gesamtlänge des Einzelzahnimplantates. Die Verschlüsselungsdrehung erfolgt in der Regel im Uhrzeigersinn. Die Retentionsflügel sind jeweils paarweise um 180° gegeneinander versetzt angeordnet.

Besonders zweckmäßig und vorteilhaft ist es, wenn das Retentionsteil am freien Ende abgerundet und mit Kerben versehen ist. Diese Retentionskerben bewirken im Grund der Alveole beim Einsetzen des Einzelzahnimplantates eine gewisse Materialverteilung.

In der Zeichnung ist eine bevorzugte Ausführungsform der Erfindung dargestellt und zeigt
Fig. 1 eine Seitenansicht eines Einzelzahnimplantates mit Aufbruch,
Fig. 2 eine Draufsicht des Einzelzahnimplantates gemäß Fig. 1,
Fig. 3 eine um 90° gedrehte Seitenansicht des Einzelzahnimplantates gemäß Fig. 1,
Fig. 4 eine Draufsicht des Einzelzahnimplantates gemäß Fig. 3,
Fig. 5 eine Draufsicht des Einzelzahnimplantates gemäß Fig. 1 mit Schnittangaben,
Fig. 6 einen Schnitt gemäß Pfeil A in Fig. 5 in einem gegenüber Fig. 5 vergrößerten Maßstab,
Fig. 7 einen Schnitt gemäß Pfeil B in Fig. 5 in einem gegenüber Fig. 5 vergrößerten Maßstab, und
Fig. 8 einen Schnitt gemäß Pfeil C in Fig. 5 in einem gegenüber Fig. 5 vergrößerten Maßstab.

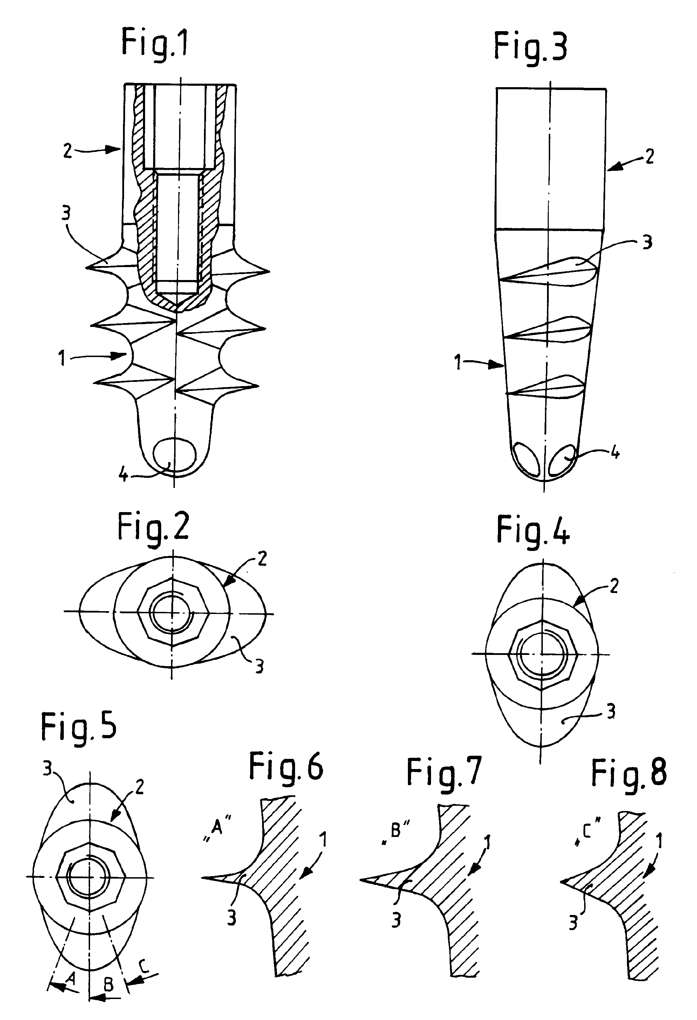

Das Einzelzahnimplantat gemäß Zeichnung besteht im Wesentlichen aus Titan oder einer Titanlegierung und besitzt ein unteres konisches Retentionsteil 1 und ein oberes zylindrisches Schaftteil 2. Am Retentionsteil 1 sind sichelförmige Retentionsflügel 3 vorgesehen, die so angeordnet sind, daß sie dem Implantat in der Draufsicht gemäß Fig. 2 eine ovale Form geben. Der Ausdruck "sichelförmig" beschreibt die Retentionsflügel 3 in ihrer Erstreckung in Umfangsrichtung entlang dem Retentionsteil 1. Die Retentionsflügel 3 haben gegenüber einer zur Mittelachse rechtwinkeligen Ebene eine leichte Schrägneigung. Das untere Ende des Einzelzahnimplantates ist abgerundet und mit Retentionskerben 4 versehen. Ein zum Implantat gehöriger nicht gezeigter Implantatpfosten und eine nicht gezeigte Verschlußkappe sind auswechselbar. Der sichelförmige Retentionsflügel 3, dessen Querschnitt sich radial nach außen verringert, weist gemäß Fig. 3 eine Keilform in folgendem Sinn auf: Die axiale Dicke des Retentionsflügels 3 nimmt in Umfangsrichtung bis zu einem Maximalwert zu, um danach wieder keilförmig abzunehmen. Dies ist auch durch Fig. 6-8 verdeutlicht. Die Retentionsflügel 3 umfassen an ihrem Fuß das im Querschnitt kreisrunde Retentionsteil 1 jeweils um 180°.

## Patentansprüche

1. Einzelzahnimplantat mit einem Schaftteil (2) und eines konischen Retentionsteil (1), das mit Verdrängungsfortsätzen versehen ist, **dadurch gekennzeichnet,** daß die Verdrängungsfortsätze in Draufsicht als sichelförmige Retentionsflügel (3) mit in Seitenansicht keilförmingern Querschnitt ausgebildet sind, die am Retentionsteil (1) einander genenüberliegend vorgesehen sind.

2. Einzelzahnimplantat nach Anspruch 1, **dadurch gekennzeichnet**, daß die Retentionsflügel (3) in Umfangsrichtung gesenen eins leichte Schrägneigung aufweisen.

3. Einzelzahnimplantat nach Anspruch 1 oder 2, **dadurch gekennzeichnet,** daß das Retentionsteil (3) am freien Ende abgerundet und mit Kerben (4) versehen ist.

## Claims

1. A single-tooth implant having a shank part (2) and a conical retention part (1) and being provided with displacement extensions, characterized in that in plan view the displacement extensions are in the form of crescent-shaped retention wings (3) which have a wedge-shaped cross-section in side view and are provided opposite one another on the retention part (1).

2. A single-tooth implant in accordance with Claim 1, characterized in that the retention wings (3) have a slight slant when viewed in the circumferential direction.

3. A single-tooth implant in accordance with Claim 1 or 2, characterized in that the free end of the retention part (3) is rounded and provided with indentations (4).

## Revendications

1. Implant dentaire individuel présentant une partie tige (2) et une partie conique de retenue (1) munie de prolongements de refoulement, caractérisé en ce que les prolongements de refoulement ont en vue de dessus la forme d'ailettes de retenue falciformes (3) ayant en vue latérale une section cunéiforme, et qui sont prévues sur la partie de retenue (1) à des emplacements opposés.

2. Implant dentaire individuel selon la revendication 1, caractérisé en ce que les ailettes de retenue (3), vues dans le sens de la circonférence, présentent une légère inclinaison en biais.

3. Implant dentaire individuel selon la revendication 1 ou 2, caractérisé en ce que la partie de retenue (3) est arrondie à son extrémité libre et est munie d'encoches (4).
